# EUROPEAN PATENT SPECIFICATION

(11) **EP 1 691 120 B1**
(45) Date of publication and mention of the grant of the patent: **16.01.2008**
(21) Application number: 05101093.2
(22) Date of filing: 14.02.2005
(51) Int. Cl.: F16K 17/38

(54) **Thermally activated pressure relief valve**
Thermisch aktivierbares Sicherheitsventil
Soupape de sécurité à activation thermique

(43) Date of publication of application: 16.08.2006
(73) Proprietor: LUXEMBOURG PATENT COMPANY S.A., 7440 Lintgen (LU)
(72) Inventor: Kremer, Paul, 7263 Walferdange (LU); Schmit, Jacques, 9365 Eppeldorf (LU)
(74) Representative: Weydert, Robert

(56) References cited:
- EP-A- 1 418 372
- GB-A- 190 901 405
- US-A- 2 489 787
- US-A- 5 791 367

## Description

The present invention relates to a thermally activated pressure relief valve, especially for a compressed or liquefied gas cylinder, or for use with a gas tap adapted to be mounted on a gas cylinder. A thermally activated pressure relief valve as defined in the precharacterizing portion of independent claim 1 is disclosed in EP-A-1 418 372.

Known thermally activated pressure relief valves are usually provided with a piston movable in a housing body and retained by a plug of fusible material, such as an eutectic metal alloy, in a closed position. If the relief valve is exposed to an abnormally high temperature exceeding a predetermined value, for example in case of fire, the fusible material melts and is forced out of a housing body under the effect of the gas cylinder pressure acting on the piston to urge the valve piston to an open position, in which it places the interior of the gas cylinder into communication with an outlet opening to release the gas pressure from within the gas cylinder to the surrounding environment. Such relief valves must open quickly in a high temperature environment but flowage of the fusible material must be avoided under normal conditions to avoid undesired opening of the relief valve. In the prior art valve the plug of fusible material is loaded in compression by the gas pressure in the gas cylinder acting on the relief valve piston. The fusible material loaded in compression has the tendency to flow with time under the effect of this compressive pressure and may be forced out of the housing body which may result in an undesired movement of the relief valve piston to its open position permitting undesired discharge of gas from within the gas cylinder even if the relief valve is not exposed to said abnormally high temperature. To prevent this, several attempts have been made in the prior art to avoid the fusible material loaded in compression to be forced out of the housing body during normal operating conditions when the normal operating conditions when the temperature of the environment is below the predetermined temperature. So, for example, in the US patents 4,800,948, 4,744,382 and 4,744,383 intricate flow passages have been proposed to prevent extrusion of the plug of fusible material. In the German laid-open publication DE 196 00 312 a member of porous material is arranged between the plug of fusible material and a housing body outlet to prevent extrusion of the fusible material during normal operation when it is in its solid state but which permits the melted fusible material to pass therethrough under the effect of the compressive load applied to the melted material. Another type of a thermally activated relief valve is disclosed in EP patent application 0 766 028, which also uses a porous member to prevent extrusion of the fusible material during normal operation. This porous member permits passage of the melted fusible material therethrough due to the relief valve having been exposed to a temperature exceeding the predetermined temperature. Another attempt to prevent extrusion of the fusible material is disclosed in US patent 6,367,500 in which there is provided a differential piston having opposing piston faces of different areas exposed to the gas pressure in the gas cylinder to thereby reduce the compressive load exerted on the plug of fusible material.

A further known thermally activated relieve valve is disclosed in the EP patent application no. 1 418 372. According to this EP patent application the fusible material is loaded by shear forces in response to the high pressure fluid acting on the relief valve piston, as the fusible material has a better resistance to shear loads than to compressive loads.

Notwithstanding the above prior art solutions, there is a need for an improved solution of the problem referred to, namely insuring quick opening of the relief valve in an overtemperature condition while preventing extrusion of the fusible material and undesired opening of the relief valve during normal operating conditions.

More particularly, the object of the invention is to provide a simple quickly responsive thermally activated pressure relief valve but which prevents undesired opening of the relief valve during normal operating conditions, and to provide a tap for a pressurized or liquefied gas cylinder having such a valve.

This object is achieved in accordance with the invention by the provision of a thermally activated pressure relief valve comprising a valve housing having a longitudinal bore, said housing further having a high pressure fluid inlet and at least one fluid outlet, a piston axially movable in the housing bore between a closed position wherein it tightly seals the fluid inlet from the fluid outlet, and an open position in which the inlet is in fluid communication with the outlet through the longitudinal bore, and a fusible means effective to normally retain the piston in the closed position, said piston being movable by the high pressure fluid to the open position in case of exposure of the relief valve to an abnormally high temperature causing melting of the fusible means, characterized in that the fusible means is a fusible sleeve disposed within said housing bore, and a slotted spring sleeve is disposed within said fusible sleeve and normally maintained by said fusible sleeve in a radially compressed condition wherein the slotted sleeve has a smaller inner diameter, said slotted sleeve being adapted to expand radially to a radially expanded condition of larger inner diameter when the relief valve is exposed to said abnormally high temperature causing melting of said fusible sleeve, said spring sleeve in said compressed condition thereof being effective to retain said piston in said closed position and said spring sleeve allowing movement of said piston to the open position in the expanded condition thereof.

In the preferred embodiment an abutment member consisting of a spherical member is normally positioned axially between the piston and the spring sleeve and held by the piston (by the fluid pressure applied thereto) in engagement with an end of the spring sleeve in its compressed condition to retain the piston in the closed position wherein it tightly engages the housing bore between the fluid inlet and the fluid outlet and is outside or externally of the spring sleeve and prevented by the abutment member to move into the spring sleeve. The spherical member is separate from a stem portion of the piston and has a maximum diameter which is slightly larger than the piston stem portion and the inner diameter of the spring sleeve in the compressed condition thereof but not larger than the inner diameter of the spring sleeve in the expanded condition thereof. In the activated state of the relief valve, namely after fusion of the fusible sleeve, the spring sleeve is in its radially expanded condition and the abutment member as well as the stem portion of the piston is received in the spring sleeve and the piston has moved axially from the closed position to the open position thereof, wherein the fluid inlet is in communication with the fluid outlet to permit discharge of the pressurized fluid to the environment surrounding the pressure relief valve. In another embodiment an abutment end portion is formed integrally in one piece with the piston stem portion. Preferably the fusible sleeve consists of an eutectic metal alloy and the spring sleeve is of metallic, spring steel material. The spring sleeve may be helically or axially slotted.

The advantage of the invention is that the load applied to the fusible sleeve in a direction tending to cause flowage of the fusible material in its solid state is reduced thereby improving the resistance to undesired opening of the relief valve. In the relief valve of the invention the axial force applied by the pressurized fluid to the piston is not fully applied to the fusible sleeve. Indeed, the resultant of the force applied by the spherical member to the spring sleeve has an axial component of force which is effective to force the sleeve axially against a bottom surface of the housing bore and a radial component of force which tends to expand the spring sleeve. Only this radial component of force, together with the spring force of the sleeve, is applied to the fusible sleeve thereby reducing the tendency of the solid fusible sleeve to flow into outlet slots of the housing. To further resist flowage of the fusible sleeve the outlet slots have a narrow, restricted flow area.

The invention will now be described in greater detail with reference to the drawings, wherein:
figure 1 is an elevational side view of the thermally activated pressure relief valve;
figure 2 is an enlarged view of the relief valve in longitudinal section taken along line A-A of figure 1 and in the non-activated condition;
figure 3 is a view similar to figure 2 but showing the thermally activated pressure relief valve in the activated condition;
figure 4 is a cross-sectional view in the direction of the arrows B-B in figure 1.
Figures 5A and 5B show another embodiment of the relief valve in a non-activated and an activated position, respectively; and
Figure 6 shows a gas tap having an integral pressure relief valve as shown in figures 5A and 5B.

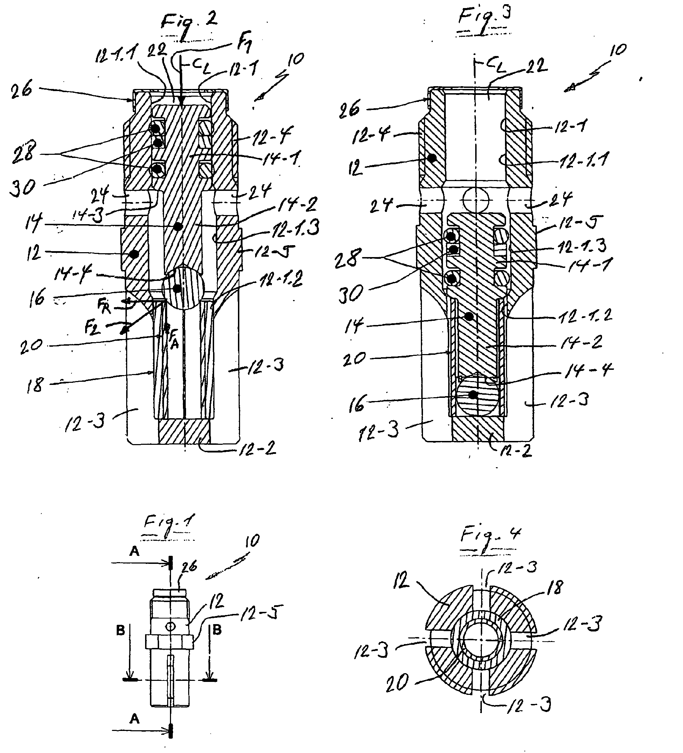

Referring now in greater detail to the drawing figures 1-4, wherein the thermally activated pressure relief valve is designated generally by reference numeral 10. The relief valve 10 consists essentially of a valve housing 12, a piston 14, an abutment member 16, a fusible sleeve 18 and an axially slotted spring sleeve 20.

The valve housing 12 is concentric about axial centerline C_{L} and has a longitudinal bore 12-1 coaxial with the centerline C_{L}. The longitudinal bore 12-1 has an upper and a lower portion of generally equal diameter 12-1.1 and 12-1.2 as well as an intermediate enlarged diameter portion 12-1.3. The longitudinal bore 12-1 opens out at the upper end of the valve housing 12, to define a high pressure fluid inlet 22. A plurality, for example four, circumferentially spaced, radially oriented fluid outlets 24 are formed through the wall of housing 12. The longitudinal bore 12-1 is closed at the end opposite the high pressure fluid inlet 22 by a housing end wall 12-2. The housing 12 has a plurality of circumferentially spaced axially extending slots 12-3 extending from the lower end surface of housing end wall 12-2 up to approximately the enlarged bore portion 12-1.3. The axially extending slots 12-3 have a relatively narrow width in circumferential direction for a purpose to be described later.

The housing 12 further has an external thread 12-4 in the upper portion thereof between the fluid outlets 24 and the upper end of the housing 12. Moreover, the outer surface of the housing 12 is provided with a polygonal, preferably hexagonal flange 12-5 to permit screwing of the relief valve by means of a wrench into a threaded opening of a valve body (not shown), preferably a gas tap body for a compressed or liquefied gas cylinder (not shown). When the pressure relief valve 10 is fixed to the tap body the fluid inlet 22 is in communication through a passage in the tap body with the interior of the gas cylinder. An annular sealing cap 26 is provided on the upper end of the valve housing 12 to permit a fluid tight engagement of the valve housing 12 with the gas tap body.

Disposed within the lower diameter portion 12-1.2 of the longitudinal bore 12-1 is the fusible sleeve 18. The fusible sleeve 18 has its outer circumferential surface in contact with the inner circumferential surface of the lower bore portion 12-1.2. The lower axial end of the fusible sleeve 18 engages the bottom surface or inner surface of housing end wall 12-1 and the upper axial end of the fusible sleeve 18 is generally located where the increased intermediate diameter portion 12-1.3 of the longitudinal bore 12-1 merges with the lower reduced diameter portion 12-1.2.

Disposed within the fusible material sleeve 18 is an axially slotted spring sleeve 20 of spring steel material. The spring sleeve 20 has generally the same length as the fusible sleeve 18 and is coextensive therewith and both sleeves 18, 20 are coaxial with housing centreline C_{L}. The spring sleeve 20 is maintained by the fusible sleeve 18 in a radially compressed condition. The spring sleeve 20, due to its spring force tends to enlarge radially outwardly and accordingly applies a radially outwardly directed load to the fusible sleeve 18.

From figure 2 it can be seen that the axial slots 12-3 of the valve housing 12 extend generally along the full length of the sleeves 18 and 20 from the lower end thereof but terminate adjacent the upper ends of the two sleeves.

Disposed within the longitudinal bore 12-1 coaxially with centreline C_{L} is also the piston 14 which has an upper head portion 14-1 and a lower stem portion 14-2 forming a radial shoulder surface 14-3 between the head and stem portions. The piston head portion 14-1 has in its outer circumferential surface two annular grooves, each having an O-ring 28 disposed therein. In the upper annular groove there is furthermore disposed a back-up ring 30 for supporting the seal ring 28. In the non-activated position of the pressure relief valve 10, shown in figure 2, the head portion 14-1 of the piston 14 is fluid tightly received in the upper reduced diameter portion 12-1.1 of longitudinal bore 12-1 to fluid tightly seal the high pressure fluid inlet 22 from the fluid outlets 24.

The piston 14 is normally retained in this non-activated condition by an abutment member 16 which has a larger maximum outer diameter than the internal diameter of the spring sleeve 20 in the radially compressed condition thereof. The piston stem portion 14-2 has at its lower end a V-shaped cut-out or recess 14-4 engaging the abutment member 16. The V-shaped cut-out has an obtuse downwardly opening angle defining a conical surface for engaging the abutment member 16 to serve as a seat therefor.

The abutment member 16 consists preferably of a spherical or ball-shaped member 16 but, generally, the abutment member 16 may have any appropriate shape having an abutment surface that decreases in diameter from the maximum outer diameter in the direction of its axial extension along the centreline C_{L} towards the housing bottom wall 12-2. For example, instead of being spherical, the abutment surface may have any other appropriate shape such as tapered, conical or curved for engagement with the upper end of the spring sleeve 20 to apply a force thereto tending to expand the spring sleeve 20 radially outwardly under the fluid pressure force applied to the piston 14 thereby assisting the spring force of the sleeve 20 to cause radial expansion thereof. If the abutment member 16 is not spherical it may have an integral pin extension (not shown) received and guided in an axial bore (not shown) of the piston 14, or the pin extension may be on the piston and received in a bore of the abutment member.

In the non-activated condition, when the upper surface of piston head portion 14-1 is exposed to a pressurized fluid, a downwardly directed force F₁ is applied to the piston 14 urging the spherical member 16 into engagement with the upper edge of the spring sleeve 20 and forcing the spring sleeve 20 downwardly against the bottom wall 12-2 of the housing 12. This causes in turn, the application of a downwardly and outwardly directed force F₂ to be applied by spherical member 16 to the spring sleeve 20. The force F₂ can be resolved into an axial component of force F_{A} and a radial component of force F_{R}. Only the radial component of force F_{R} of the resultant force F₂ applies an outwardly directed force or load on the fusible sleeve 18. The force F_{R} caused by the fluid pressure acts in conjunction with the spring force of slotted sleeve 20 tending to enlarge the sleeve 20. The spring force and the fluid pressure force F_{R} are lower than the application of a load on the fusible material corresponding to the full axial force F₁ applied to the piston 14.

The combined radially outwardly directed load applied to the fusible sleeve 18 tends to cause flowage of the fusible sleeve into the axial slots 12-3 in the non-activated condition of figure 2. To prevent this the axially extending slots 12-3 have a relative narrow width in circumferential direction to resist flowage of the fusible sleeve 18 into the slots 12-3 in the solid, non-fused condition of the sleeve 18. Instead of the slots 12-3 the housing wall portion surrounding the fusible material 18 may also be formed partially or totally of porous material.

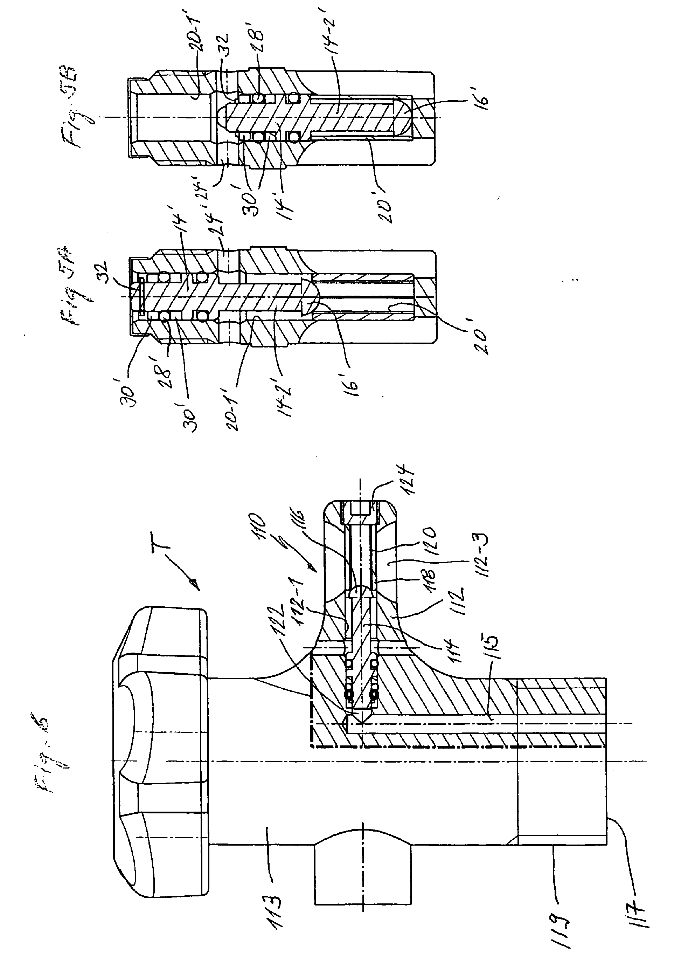

Referring now particularly to figures 2 and 3 showing the non-activated and the activated condition, respectively, of the pressure relief valve 10 of the invention, it can be noted that in the non-activated condition of figure 2, spring sleeve 20 acts as a stop means against which the spherical member 16 abuts. Accordingly, the spherical member 16 cannot move into the spring sleeve 20 thereby retaining the piston 14 in a first axial position along centreline C_{L} wherein it is outside or externally of the spring sleeve 20 and is in an upper position in which the seal rings 28 are in fluid tight engagement with the housing bore section 12-1.1 thereby providing a fluid tight seal between the high pressure inlet 22 and the fluid outlets 24. In this non-activated condition the fusible sleeve 18 is in its solid state preventing radial outward expansion of the spring sleeve 20.

In case the relief valve 10 is exposed to an abnormally high temperature the fusible sleeve 18 melts and the molten material is expulsed from within the housing longitudinal bore 22 by the expanding spring sleeve 20 through the narrow axial slots 12-3 by the combined action of the spring force of the sleeve and the gas pressure applied to the piston. In the radially outwardly expanded condition of the spring sleeve 20 its inner diameter is larger than (or at least as large as) the outer diameter of the spherical member 16. Accordingly, the spring sleeve 20 is radially outwardly retracted from the path of movement of the spherical member 16 and can no longer act as an axial stop means for the spherical member 20 so that the spherical member 16 can move into the sleeve 20 and is indeed positively moved thereinto by the fluid pressure force applied to the piston 14 and from the piston 14 to the spherical member 16 until the spherical member 16 contacts the inner surface of the housing bottom wall 12-2. The piston 14 is now in a second axial position relative to the centreline C_{L} wherein the stem portion 14-2 extends into the spring sleeve 20 and the radial shoulder surface 14-3 comes to rest on the upper end surface of spring sleeve 20. Further, the piston head portion 14-1 is now positioned entirely within the enlarged diameter portion 12-1.3 of longitudinal bore 12-1 and the high pressure inlet port 22 of housing 12 is in fluid communication with the outlet ports 24. It is noted that the stem portion 14-2 of piston 14 is slightly smaller in diameter than the spherical member or wall member 16 to permit piston stem portion 14-2 to move into the slotted sleeve with minimum frictional resistance.

In use, the relief valve 10 is fixed to a gas tap of a pressurized or liquefied gas cylinder and serves to relief the gas pressure from within the cylinder in the activated condition of figure 3 when the gas cylinder and accordingly the relief valve is exposed to an abnormally high temperature, for example in case of a fire.

In another embodiment, shown in figures 5A and 5B, the spherical or ball member 16 forming the abutment member in the embodiment of figures 1-4, is replaced by a lower enlarged diameter abutment end portion 16' of semi-spherical shape integrally formed with the stem portion 14-2' of piston 14'. Instead of being semi-spherical this enlarged diameter abutment end portion 16' may also have a tapered, conical, truncated or curved abutment surface of another appropriate shape for the application of a force to the spring sleeve 20' to expand the spring sleeve 20' under the effect of the fluid pressure force applied to the piston 14'. Otherwise, the relief valve of figures 5A and 5B is generally the same as the relief valve of the embodiment of figures 1-4, except that the bore 20-1' has a generally constant diameter along the length thereof (except at the outlet openings 24') and the upper sealing ring 28' is located between two back-up rings 30' and a split spring retaining ring 32 retains the three rings 28', 29', 30' on the piston 14'.

Further, as shown in figure 6, the relief valve housing 112 may be integrally formed in one piece with a body 113 of a tap T, such as a gas tap for a pressurized or liquefied gas container or vessel (not shown). As shown in figure 6 the high pressure fluid inlet 122 of the relief valve 110 is in fluid communication with a passage 115 in the tap body 113, which passage 115 opens out in a lower end face 117 of a threaded base section 119 of the tap body 113. When base section 119 is threaded into an opening of a pressurized fluid container or vessel the passage 115 is in fluid communication with the interior of the container or vessel and the relief valve piston 114 is exposed to the fluid pressure in the container or vessel. The relief valve 110 shown in figure 6 is generally identical to the relief valve 10 of figures 5A and 5B, except that the housing bore 112-1 opens out in the free end face of the relief valve housing 112 and a plug 124 is threaded into the housing bore 112-1 to close the same and provide an inner abutment surface for the fusible sleeve 118 and the spring sleeve 120. The plug 124 is removable to permit assembly of the pressure relief valve 110 through the free end face of valve housing 112. Also, the fused material outlet slots 12-3 are shorter and do not extend up to the housing end face. Although the relief valve 110 of figure 6 has the abutment 116 integrally formed with the piston 114, as in the figures 5A and 5B of the embodiment, the semi-spherical abutment end portion 116 of figure 6 may be replaced by a spherical or ball-shaped abutment member separate from the piston 114 as in the embodiment of figures 1-4.

In a further modified embodiment not shown in the drawings the abutment member may be an abutment sleeve separate from the piston and wherein the piston stem is received. This abutment sleeve has at its lower end the abutment surface and may have at its upper end a radial flange for engaging the upper end of the slotted sleeve in the activated condition. In this embodiment the abutment member is not fully received in the slotted spring sleeve in the activated condition of the valve.

Although the invention has been described in considerable detail with reference to preferred embodiment thereof, modifications or variations may be made to the preferred embodiments by one skilled in the art without leaving the scope of the invention as defined by the annexed claims.

## Claims

1. Thermally activated pressure relief valve comprising a valve housing (12) having a longitudinal bore (12-1), said housing (12) further having a high pressure fluid inlet (22) and at least one fluid outlet (24), a piston (14) axially movable in the housing bore (12-1) between a closed position wherein it tightly seals the fluid inlet (22) from the fluid outlet (24), and an open position in which the inlet (22) is in fluid communication with the outlet (24) through the longitudinal bore (12-1), and a fusible means effective to normally retain the piston (14) in the closed position, said piston (14) being movable by the high pressure fluid to the open position in case of exposure of the relief valve (10) to an abnormally high temperature causing melting of the fusible means,
**characterized in that** the fusible means is a fusible sleeve (18) disposed within said housing bore (12-1), and a slotted spring sleeve (20) is disposed within said fusible sleeve (18) and normally maintained by said fusible sleeve (18) in a radially compressed condition wherein the slotted sleeve (20) has a smaller inner diameter, said slotted sleeve (20) being adapted to expand radially to a radially expanded condition of larger inner diameter when the relief valve (10) is exposed to said abnormally high temperature causing melting of said fusible sleeve (18), said spring sleeve (20) in said compressed condition thereof being effective to retain said piston (14) in said closed position and said spring sleeve (20) allowing movement of said piston (14) to the open position in the expanded condition thereof.

2. Relief valve according to claim 1, **characterized in that** it further comprises an abutment member (16), said spring sleeve (20), in the radially compressed condition thereof, serving as a stop means for said abutment member (16) to prevent movement of the abutment member (16) in the piston opening direction beyond an axial position corresponding to the closed position of the piston (14), while in the radially expanded condition the spring sleeve (20) allows the abutment member (16) to move relative to the spring sleeve (20) in the piston opening direction beyond said axial position to permit movement of the piston (14) from the closed to the open position.

3. Relief valve according to claim 2, **characterized in that** the housing bore (12-1) has an axial centerline (C_{L}) and the piston (14), the abutment member (16) and the fusible and spring sleeves (18, 20) are coaxial with said centreline (C_{L}).

4. Relief valve according to claim 2 or 3, **characterized in that** the abutment member (16) has an abutment surface adapted to axially engage the spring sleeve (20) in the radially compressed condition thereof, said abutment surface decreasing in diameter from an outer diameter in the direction of movement of the piston (14) from the closed to the open position, said outer diameter being at most as large as the larger inner diameter of the spring sleeve (20) but larger than the smaller inner diameter of the spring sleeve (20).

5. Relief valve according to anyone of claims 2 to 4, **characterized in that** the abutment member (16) is separate from said piston (14).

6. Relief valve according to claim 5, **characterized in that** said abutment member (14) is a spherical member.

7. Relief valve according to claim 6, **characterized in that** there is provided a conical recess (14-4) in an end of said piston (14) facing said spherical member, said conical recess (14-4) defining a seat surface for said spherical member.

8. Relief valve according to anyone of claims 2 to 7, **characterized in that** the piston (14) has a stem portion (14-2) and an enlarged head portion (14-1), said abutment member (16) and at least a part of said stem portion (14-2) being received within the spring sleeve (20) in the expanded condition thereof when said piston (14) is in said open position.

9. Relief valve according to claim 7, **characterized in that** said stem portion (14-2) has a smaller outer diameter than the outer diameter of said abutment member (16).

10. Relief valve according to claim 1, **characterized in that** said piston (14') has an abutment end portion (16'), said spring sleeve (20'), in the radially compressed condition thereof, serving as a stop means for said abutment end portion (16') to prevent axial movement of the piston (14') from the closed to the open position, while in the radially expanded condition the spring sleeve (20') allows axial movement of the piston (14') from the closed to the open position.

11. Relief valve according to claim 10, **characterized in that** the housing bore has an axial centerline and the piston (14'), the fusible sleeve (18') and the spring sleeve (20') are coaxial of said centerline.

12. Relief valve according to claim 10 or 11, **characterized in that** the abutment end portion (16') of the piston (14') has an abutment surface adapted to axially engage the spring sleeve (20') in the radially compressed condition thereof, said abutment surface decreasing in diameter from an outer diameter in the direction of movement of the piston (14') from the closed to the open position, said outer diameter being at most as large as the larger inner diameter of the spring sleeve (20') but larger than the smaller inner diameter of the spring sleeve (20').

13. Relief valve according to claim 12, **characterized in that** the abutment end portion (16') of the piston (14') is semispherical.

14. Relief valve according to anyone of claims 10 to 13, **characterized in that** the piston has a stem portion (14-2') and an enlarged head portion, said abutment end portion (16') forming an end of the stem portion (14-2') spaced from the enlarged head portion, at least a part of the stem portion (14-2') provided with said abutment end portion (16') being received within the spring sleeve (20') in the expanded condition thereof when said piston (14') is in said open position.

15. Relief valve according to claim 14, **characterized in that** said stem portion (14-2') has between the enlarged head portion and the abutment end portion (16') an outer diameter which is smaller than the maximum outer diameter of the abutment end portion (16').

16. Relief valve according to claim 8 or 15, **characterized in that** a radial shoulder surface (14-3) is formed between the stem portion (14-2) and the head portion (14-1) of the piston (14), said shoulder surface (14-3) engaging an axial end of the spring sleeve (20) when the piston (14) is in said open position.

17. Relief valve according to anyone of claims 1 to 16, **characterized in that** an axial end of each of the fusible and spring sleeves (18, 20) facing away from said piston (14) is in engagement with a radial housing bore surface.

18. Relief valve according to anyone of claims 1 to 17, **characterized in that** said housing (12) has outlet means communicating with the housing bore (12-1) at the location of the fusible sleeve (18) to permit fused material of said fusible sleeve (18) to flow out from within said housing bore (12-1) through said outlet means.

19. Relief valve according to claim 18, **characterized in that** the outlet means comprises a plurality of circumferentially spaced, axially extending slots (12-3) formed through a housing wall, said slots (12-3) extending axially generally along the fusible sleeve (18).

20. Relief valve according to claim 19, **characterized in that** the axially extending slots (12-3) have a relatively narrow width in circumferential direction to resist flowage of the fusible sleeve (18) into said slots (12-3) in its solid, non-fused condition.

21. Relief valve according to anyone of claims 1 to 20, **characterized in that** said fusible sleeve (18) consists of eutectic material.

22. Relief valve according to anyone of claims 1 to 21, **characterized in that** the spring sleeve (20) is of metallic, preferably spring steel material.

23. Relief valve according to anyone of claims 1 to 22, **characterized in that** the spring sleeve (20) is axially slotted.

24. Relief valve according to anyone of claims 1 to 23, **characterized in that** the housing (12) has an outer screw thread (12-4) on an end portion thereof for threadably screwing the relief valve (10) in an opening of a tap body, such as a pressurized or liquefied gas tap body, said high pressure fluid inlet (22) being formed in an end surface of said housing end portion.

25. Relief valve according to claim 24, **characterized in that** an annular sealing cap (26) is provided on said housing end portion.

26. A tap, such as a gas tap for a pressurized or liquefied gas cylinder, comprising a tap body (113) having a flow passage (115) opening out in a base section (119) of the tap body (113) for communication with a pressurized fluid container on which the tap (T) is to be mounted, and a thermally activated pressure relief valve (110) according to anyone of claims 1 to 23, wherein the valve housing (112) is integrally formed with the tap body (113) and the high pressure fluid inlet (122) is in communication with the tap body flow passage (115).

27. A tap according to claim 26, **characterized in that** said housing bore opens out through an end face of said housing (112) and a removable plug (124) is secured to said housing (112) adjacent said end face to provide an abutment surface for said fusible and spring sleeves (18, 20) and permit assembly of the relief valve (110) through said housing end face.

## Patentansprüche

1. Thermisch aktivierbares Sicherheitsventil mit einem Ventilgehäuse (12), das eine Längsbohrung (12-1) aufweist, wobei das Gehäuse (12) des weiteren einen Hochdruckfluideinlass (22) und mindestens einen Fluidauslass (24) aufweist, einem Kolben (14), der in der Gehäusebohrung (12-1) axial beweglich ist zwischen einer geschlossenen Stellung, in welcher er den Fluideinlass (22) gegenüber dem Fluidauslass (24) dicht abdichtet, und einer offenen Stellung, in welcher der Einlass (22) durch die Längsbohrung (12-1) in Fluidverbindung mit dem Auslass (24) steht, und einem Schmelzmittel, das wirksam ist, um den Kolben (14) normalerweise in der geschlossenen Stellung zurückzuhalten, wobei der Kolben (14) durch Hochdruckfluid in die offene Stellung beweglich ist wenn das Sicherheitsventil (10) einer anormal hohen Temperatur ausgesetzt ist, die das Schmelzen des Schmelzmittels verursacht,
**dadurch gekennzeichnet, dass** das Schmelzmittel eine Schmelzhülse (18) ist, die sich in der Gehäusebohrung (12-1) befindet und eine geschlitzte Federhülse (20) in die Schmelzhülse (18) eingesetzt ist und normalerweise durch die Schmelzhülse (18) in einem radial zusammengedrückten Zustand gehalten wird, in welchem die geschlitzte Hülse (20) einen kleineren Innendurchmesser aufweist, wobei die geschlitzte Hülse (20) sich radial zu einem radial erweiterten Zustand mit grösserem Innendurchmesser aufweiten kann, wenn das Sicherheitsventil (10) der anormal hohen Temperatur ausgesetzt ist, die das Schmelzen der Schmelzhülse (18) bewirkt, wobei die Federhülse (20) in ihrem zusammengedrückten Zustand wirksam ist zum Zurückhalten des Kolbens (14) in der geschlossenen Stellung und die Federhülse (20) in ihrem erweiterten Zustand die Bewegung des Kolbens (14) in die offene Stellung zulässt.

2. Sicherheitsventil nach Anspruch 1, **dadurch gekennzeichnet, dass** es des weiteren ein Widerlagerelement (16) aufweist, wobei die Federhülse (20), in ihrem radial zusammengedrückten Zustand, als ein Anschlagmittel für das Widerlagerelement (16) dient, um eine Bewegung des Widerlagerelementes (16) in der Richtung der Öffnungsbewegung des Kolbens über eine Axialstellung hinaus, die der geschlossenen Stellung des Kolbens (14) entspricht, zu verhindern, während die Federhülse (20) in ihrem radial erweiterten Zustand eine Bewegung des Widerlagerelementes (16) in Bezug auf die Federhülse (20) in der Richtung der Öffnungsbewegung des Kolbens über die besagte Axialstellung hinaus zulässt, um eine Bewegung des Kolbens (14) aus der geschlossenen in die offene Stellung zu erlauben.

3. Sicherheitsventil nach Anspruch 2, **dadurch gekennzeichnet, dass** die Gehäusebohrung (12-1) eine axiale Mittellinie (C_{L}) aufweist und der Kolben (14), das Widerlagerelement (16), sowie die Schmelzhülse (18) und die geschlitzte Hülse (20) koaxial mit der Mittellinie (C_{L}) sind.

4. Sicherheitsventil nach Anspruch 2 oder 3, **dadurch gekennzeichnet, dass** das Widerlagerelement (16) eine Widerlagerfläche aufweist zur axialen Anlage an der Federhülse (20) in dem radial zusammengedrückten Zustand derselben, wobei der Durchmesser der Widerlagerfläche ausgehend von einem Aussendurchmesser in Richtung der Bewegung des Kolbens (14) aus der geschlossenen in die offene Stellung abnimmt, und der Aussendurchmesser höchstens so gross ist wie der grössere Innendurchmesser der Federhülse (20) aber grösser ist als der kleinere Innendurchmesser der Federhülse (20).

5. Sicherheitsventil nach einem der Ansprüche 2 bis 4, **dadurch gekennzeichnet, dass** das Widerlagerelement (16) ein von dem Kolben (14) getrenntes Bauteil ist.

6. Sicherheitsventil nach Anspruch 5, **dadurch gekennzeichnet, dass** das Widerlagerelement (14) ein kugelförmiger Bauteil ist.

7. Sicherheitsventil nach Anspruch 6, **dadurch gekennzeichnet, dass** ein kegelförmiger Ausschnitt (14-4) in einem Ende des Kolbens (14) vorgesehen ist, das an den kugelförmigen Bauteil angrenzt und der kegelförmige Ausschnitt (14-4) eine Sitzfläche für den kugelförmigen Bauteil bildet.

8. Sicherheitsventil nach einem der Ansprüche 2 bis 7, **dadurch gekennzeichnet, dass** der Kolben (14) einen Schaft (14-2) und einen vergrösserten Kopfteil (14-1) aufweist, wobei das Widerlagerelement (16) und zumindest ein Teil des Schaftteiles (14-2) in dem erweiterten Zustand der Federhülse (20) in dieser aufgenommen sind, wenn der Kolben (14) die offene Stellung einnimmt.

9. Sicherheitsventil nach Anspruch 7, **dadurch gekennzeichnet, dass** der Schaftteil (14-2) einen kleineren Aussendurchmesser als der Aussendurchmesser des Widerlagerelementes (16) besitzt.

10. Sicherheitsventil nach Anspruch 1, **dadurch gekennzeichnet, dass** der Kolben (14') einen Widerlagerendteil (16') besitzt, wobei die Federhülse (20'), in ihrem radial zusammengedrückten Zustand, als ein Anschlagmittel für den Widerlagerendteil (16') dient, um eine Axialbewegung des Kolbens (14') aus der geschlossenen in die offene Stellung zu verhindern, während in dem radial erweiterten Zustand die Federhülse (20') eine Axialbewegung des Kolbens (14') aus der geschlossenen in die offene Stellung zulässt.

11. Sicherheitsventil nach Anspruch 10, **dadurch gekennzeichnet, dass** die Gehäusebohrung eine axiale Mittellinie aufweist und der Kolben (14'), die Schmelzhülse (18') und die Federhülse (20') koaxial zu der Mittellinie sind.

12. Sicherheitsventil nach Anspruch 10 oder 11, **dadurch gekennzeichnet, dass** der Widerlagerendteil (16') des Kolbens (14') eine Widerlagerfläche aufweist zur axialen Anlage an der Federhülse (20') in dem radial zusammengedrückten Zustand derselben, wobei der Durchmesser der Widerlagerfläche ausgehend von einem Aussendurchmesser in der Richtung der Bewegung des Kolbens (14') aus der geschlossenen in die offene Stellung abnimmt, und der Aussendurchmesser höchstens so gross ist wie der grössere Innendurchmesser der Federhülse (20') aber grösser ist als der kleinere Innendurchmesser der Federhülse (20').

13. Sicherheitsventil nach Anspruch 12, **dadurch gekennzeichnet, dass** der Widerlagerendteil (16') des Kolbens (14') halbsphärisch ist.

14. Sicherheitsventil nach einem der Ansprüche 10 bis 13, **dadurch gekennzeichnet, dass** der Kolben einen Schaftteil (14-2') und einen vergrösserten Kopfteil aufweist, wobei der Widerlagerendteil (16') ein Ende des Schaftteiles (14-2') bildet, das von dem vergrösserten Kopfteil beabstandet ist, und wobei mindestens ein Teil des Schaftteiles (14-2') der den Widerlagerendteil (16') trägt in dem erweiterten Zustand der Federhülse (20') in dieser aufgenommen ist, wenn der Kolben (14') die offene Stellung einnimmt.

15. Sicherheitsventil nach Anspruch 14, **dadurch gekennzeichnet, dass** der Schaftteil (14-2') zwischen dem vergrösserten Kopfteil und dem Widerlagerendteil (16') einen Aussendurchmesser aufweist, der kleiner ist als der maximale Aussendurchmesser des Widerlagerendteiles (16').

16. Sicherheitsventil nach Anspruch 8 oder 15, **dadurch gekennzeichnet, dass** eine radiale Schulterfläche (14-3) zwischen dem Schaftteil (14-2) und dem Kopfteil (14-1) des Kolbens (14) vorgesehen ist, wobei die Schulterfläche (14-3) an einem Axialende der Federhülse (20) anliegt, wenn der Kolben (14) sich in seiner Offenstellung befindet.

17. Sicherheitsventil nach einem der Ansprüche 1 bis 16, **dadurch gekennzeichnet, dass** ein axiales Ende der Schmelzhülse (18) und der Federhülse (20), welche von dem Kolben (14) weg gerichtet sind, an einer radialen Fläche der Gehäusebohrung anliegen.

18. Sicherheitsventil nach einem der Ansprüche 1 bis 17, **dadurch gekennzeichnet, dass** das Gehäuse (12) ein Auslassmittel aufweist, das mit der Gehäusebohrung (12-1) in dem Bereich der Schmelzhülse (18) kommuniziert; damit Schmelzmaterial der Schmelzhülse aus der Gehäusebohrung (12-1) durch das Auslassmittel abfliessen kann.

19. Sicherheitsventil nach Anspruch 18, **dadurch gekennzeichnet, dass** das Auslassmittel mehrere in Umfangsrichtung voneinander beabstandete, axial ausgerichtete Schlitze (12-3) aufweist, die durch die Gehäusewand geformt sind, wobei die Schlitze (12-3) sich im Wesentlichen axial entlang der Schmelzhülse (18) erstrecken.

20. Sicherheitsventil nach Anspruch 19, **dadurch gekennzeichnet, dass** die sich axial erstreckenden Schlitze (12-3) eine verhältnismässig enge Breite in Umfangsrichtung aufweisen, um ein Fliessen der Schmelzhülse (18) in ihrem festen, nicht geschmolzenen Zustand in die Schlitze (12-3) zu verhindern.

21. Sicherheitsventil nach einem der Ansprüche 1 bis 20, **dadurch gekennzeichnet, dass** die Schmelzhülse (18) aus eutektischem Werkstoff besteht.

22. Sicherheitsventil nach einem der Ansprüche 1 bis 21, **dadurch gekennzeichnet, dass** die Federhülse (20) aus metallischem Werkstoff, vorzugsweise Federstahl, besteht.

23. Sicherheitsventil nach einem der Ansprüche 1 bis 22, **dadurch gekennzeichnet, dass** die Federhülse (20) axial geschlitzt ist.

24. Sicherheitsventil nach einem der Ansprüche 1 bis 23, **dadurch gekennzeichnet, dass** das Gehäuse (12) ein Aussengewinde (12-4) an einem Endteil desselben aufweist zum Einschrauben des Sicherheitsventils (10) in eine Öffnung eines Ventilgehäuses, wie z.B. ein Druck- oder Flüssiggasventilgehäuse, wobei der Hochdruckfluideinlass (22) in einer Endfläche des Gehäuseendteiles vorgesehen ist.

25. Sicherheitsventil nach Anspruch 24, **dadurch gekennzeichnet, dass** eine ringförmige Dichtkappe (26) an dem Gehäuseendteil vorgesehen ist.

26. Ventil, wie z.B. ein Gasventil für eine Druck- oder Flüssiggasflasche, mit einem Ventilkörper (113), der einen Duchlasskanal (115) aufweist, der an einem Basisabschnitt (119) des Ventilkörpers (113) austritt zum Kommunizieren mit einem Druckfluidbehälter an welchem das Ventil (T) zu befestigen ist, sowie einem thermisch aktivierten Sicherheitsventil (110) gemäss einem der Ansprüche 1 bis 23, wobei das Ventilgehäuse (112) einteilig an dem Ventilkörper (113) angeformt ist und der Hochdruckfluideinlass (122) mit dem Durchlass (115) des Ventilkörpers (113) in Verbindung steht.

27. Ventil nach Anspruch 26, **dadurch gekennzeichnet, dass** die Gehäusebohrung an einer Endfläche des Gehäuses (112) mündet und ein entfernbarer Stopfen (124) am Gehäuse (112) angrenzend an die Endfläche befestigt ist, um eine Widerlagerfläche für die Schmelzhülse (18) und die Federhülse (20) zu schaffen und damit das Sicherheitsventil (110) durch die Gehäuseendfläche eingebaut werden kann.

## Revendications

1. Soupape de sécurité à activation thermique comportant un boîtier de soupape (12) ayant un alésage longitudinal (12-1), ce boîtier (12) ayant en outre une entrée de fluide haute pression (22) et au moins une sortie de fluide (24), un piston (14) mobile en direction axiale dans l'alésage (12-1) du boîtier entre une position fermée dans laquelle il bloque de façon étanche la communication de l'entrée de fluide (22) avec la sortie de fluide (24), et une position ouverte dans laquelle l'entrée (22) est en communication de fluide avec la sortie (24) par l'alésage longitudinal (12-1), et un moyen fusible effectif pour normalement retenir le piston (14) dans la position fermée, ce piston (14) étant mobile par le fluide haute pression vers la position ouverte en cas d'exposition de la soupape de sécurité (14) à une température anormalement élevée causant la fusion du moyen fusible,
**caractérisée en ce que** le moyen fusible est une douille fusible (18) disposée dans l'alésage (12-1) du boîtier, et une douille élastique fendue (20) est disposée dans la douille fusible (18) et normalement maintenue par cette douille fusible (18) en un état comprimé radialement dans lequel la douille fendue (20) a un plus petit diamètre interne, cette douille fendue (20) étant adaptée de s'élargir radialement vers un état radialement élargi de plus grand diamètre interne si la soupape de sécurité (10) est exposée à ladite température anormalement élevée causant la fusion de la douille fusible (18), la douille élastique (20) étant effective, à son état comprimé, en vue de retenir le piston (14) dans ladite position fermée, et la douille élastique (20) permettant un mouvement du piston (14) vers la position ouverte à son état élargi.

2. Soupape de sécurité selon la revendication 1, **caractérisée en ce qu'**elle comporte en outre un élément d'appui (16), ladite douille élastique (20), à son état comprimé radialement, servant comme moyen un d'arrêt pour l'élément d'appui (16) en vue d'empêcher le mouvement de l'élément d'appui (16) dans la direction d'ouverture du piston au-delà d'une position axiale correspondant à la position fermée du piston (14), alors qu'à son état radialement élargi la douille élastique (20) permet à l'élément d'appui (16) de mouvoir par rapport à la douille élastique (20) dans la direction d'ouverture du piston au-delà de ladite position axiale pour permettre le mouvement du piston (14) de la position fermée vers la position ouverte.

3. Soupape de sécurité selon la revendication 2, **caractérisée en ce que** l'alésage (12-1) du boîtier a un axe central axial (C_{L}) et le piston (14), l'élément d'appui (16) et les douilles fusible et élastique (18, 20) sont coaxiales avec cet axe central (C_{L}).

4. Soupape de sécurité selon la revendication 2 ou 3, **caractérisée en ce que** l'élément d'appui (16) a une surface d'appui adaptée en vue d'engager la douille élastique (20) axialement à son état comprimé radialement, cette surface d'appui diminuant en diamètre à partir d'un diamètre externe dans la direction de mouvement du piston (14) de la position fermée vers la position ouverte, ce diamètre externe étant au plus aussi grand que le plus grand diamètre interne de la douille élastique (20) mais plus grand que le plus petit diamètre interne de la douille élastique (20).

5. Soupape de sécurité selon l'une quelconque des revendications 2 à 4, **caractérisée en ce que** l'élément d'appui (16) est un élément séparé du piston (14).

6. Soupape de sécurité selon la revendication 5, **caractérisée en ce que** l'élément d'appui (14) est un élément sphérique.

7. Soupape de sécurité selon la revendication 6, **caractérisée en ce qu'**une découpe conique (14-4) est formée dans une extrémité du piston (14) faisant face vers l'élément sphérique, cette découpe conique (14-4) formant une surface de siège pour l'élément sphérique.

8. Soupape de sécurité selon l'une quelconque des revendications 2 à 7, **caractérisée en ce que** le piston (14) a une partie de tige (14-2) et une partie de tête élargie (14-1), ledit élément d'appui (16) et au moins une partie de la partie de tige (14-2) étant reçus dans la douille élastique (20) à l'état élargi de celle-ci, lorsque le piston (14) se trouve dans sa position ouverte.

9. Soupape de sécurité selon la revendication 7, **caractérisée en ce que** la partie de tige (14-2) a un diamètre externe plus faible que le diamètre externe de l'élément d'appui (16).

10. Soupape de sécurité selon la revendication 1, **caractérisée en ce que** le piston (14') a une partie d'appui terminale (16'), la douille élastique (20'), à son état comprimé radialement, servant comme un moyen d'arrêt pour cette partie d'appui terminale (16') en vue d'empêcher le mouvement axial du piston de la position fermée vers la position ouverte, alors qu'à l'état élargi radialement la douille élastique (20') permet le mouvement axial du piston (14') de la position fermée vers la position ouverte.

11. Soupape de sécurité selon la revendication 10, **caractérisée en ce que** l'alésage du boîtier a un axe central axial et le piston (14'), la douille fusible (18') et la douille élastique (20') sont coaxiales par rapport à cet axe central.

12. Soupape de sécurité selon la revendication 10 ou 11, **caractérisée en ce que** la partie d'appui terminale (16') du piston (14') a une surface d'appui conçue en vue d'engager la douille élastique (20') axialement à l'état comprimé radialement de celle-ci, ladite surface d'appui diminuant en diamètre à partir d'un diamètre externe dans la direction de mouvement du piston (14') de la position fermée vers la position ouverte, ce diamètre externe étant au plus aussi grand que le diamètre interne plus grand de la douille élastique (20') mais plus grand que le diamètre interne plus faible de la douille élastique (20').

13. Soupape de sécurité selon la revendication 12, **caractérisée en ce que** la partie d'appui terminale (16') du piston (14') est hémisphérique.

14. Soupape de sécurité selon l'une quelconque des revendications 10 à 13, **caractérisée en ce que** le piston a une partie de tige (14-2') et une partie de tête élargie, ladite partie d'appui terminale (16') formant une extrémité de la partie de tige (14-2') espacé de la partie de tête élargie, au moins une part de la partie de tige (14-2') pourvue de la partie d'appui terminale (16') étant reçue dans la douille élastique (20') à l'état élargi de celle-ci, si le piston (14') se trouve dans la position ouverte.

15. Soupape de sécurité selon la revendication 14, **caractérisée en ce que** la partie de tige (14-2') a entre la partie de tête élargie et la partie d'appui terminale (16') un diamètre externe plus faible que le diamètre externe maximal de la partie d'appui terminale (16').

16. Soupape de sécurité selon la revendication 8 ou 15, **caractérisée en ce qu'**une surface d'épaule radiale (14-3) est formée entre la partie de tige (14-2) et la partie de tête (14-1) du piston (14), cette surface d'épaule (14-3) engageant une extrémité axiale du manchon élastique (20), si le piston (14) se trouve dans sa position ouverte.

17. Soupape de sécurité selon l'une quelconque des revendications 1 à 16, **caractérisée en ce qu'**une extrémité axiale de chacune des douilles fusible et élastique (18, 20) faisant face en une direction s'éloignant du piston (14) est en engagement avec une surface radiale de l'alésage du boîtier.

18. Soupape de sécurité selon l'une quelconque des revendications 1 à 17, **caractérisée en ce que** le boîtier (12) a une moyen de sortie communiquant avec l'alésage (12-1) du boîtier à l'endroit de la douille fusible (18) pour permettre au matériau de fusion de la douille fusible (18) de s'écouler depuis l'intérieur de l'alésage (12-1) du boîtier par ce moyen de sortie.

19. Soupape de sécurité selon la revendication 18, **caractérisée en ce que** le moyen de sortie comporte une pluralité de rainures (12-3) espacées circonférentiellement l'une de l'autre et s'étendant axialement, formées à travers une paroi du boîtier, ces rainures (12-3) s'étendant axialement généralement le long de la douille fusible (18).

20. Soupape de sécurité selon la revendication 19, **caractérisée en ce que** les rainures (12-3) s'étendant axialement ont une largueur relativement étroite en direction circonférentielle pour résister à la pénétration de la douille fusible (18) dans les rainures (12-3) à son état solide, non-fusionné.

21. Soupape de sécurité selon l'une quelconque des revendications 1 à 20, **caractérisée en ce que** ladite douille fusible (18) consiste en matière eutectique.

22. Soupape de sécurité selon l'une quelconque des revendications 1 à 21, **caractérisée en ce que** la douille élastique (20) est fabriquée de matière métallique, de préférence d'acier à ressort.

23. Soupape de sécurité selon l'une quelconque des revendications 1 à 22, **caractérisée en ce que** la douille élastique (20) est fendue en direction axiale.

24. Soupape de sécurité selon l'une quelconque des revendications 1 à 23, **caractérisée en ce qu'**une partie d'extrémité le boîtier (12) est pourvue d'un filetage externe (12-4) pour pouvoir visser la soupape de sécurité (10) dans une ouverture d'un corps de robinet, tel qu'un corps de robinet de gaz sous pression ou liquéfié, ladite entrée de fluide haute pression (22) étant formée dans une surface d'extrémité de la partie d'extrémité du boîtier.

25. Soupape de sécurité selon la revendication 24, **caractérisée en ce qu'**une capsule d'étanchéité annulaire (26) est portée par ladite partie d'extrémité du boîtier.

26. Robinet, en particulier un robinet de gaz pour une bouteille de gaz sous pression ou liquéfié, comportant un corps de robinet (113) ayant un passage d'écoulement (115) débouchant dans une section de base (119) du corps de robinet (113) pour communication avec un conteneur de fluide sous pression auquel le robinet (T)est à fixer, et une soupape de sécurité à activation thermique (110) suivant l'une quelconque des revendications 1 à 23, le boîtier (112) de la soupape étant formé d'une seule partie avec le corps de robinet (113) et l'entrée de fluide haute pression (112) étant en communication avec le passage d'écoulement (115) du corps de robinet.

27. Robinet selon la revendication 26, **caractérisé en ce que** l'alésage du boîtier débouche à travers une face d'extrémité (112) du boîtier et un bouchon amovible (124) est fixé au boîtier à proximité de la face d'extrémité en vue de former une surface d'appui pour les douilles fusible et élastique (18, 20) et afin de permettre l'assemblage de la soupape de sécurité (110) par ladite face d'extrémité du boîtier.
